# EUROPEAN PATENT SPECIFICATION

(11) **EP 1 431 352 B1**
(45) Date of publication and mention of the grant of the patent: **23.04.2008**
(21) Application number: 02028740.5
(22) Date of filing: 20.12.2002
(51) Int. Cl.: C09C 3/08, C09C 3/10, C09C 1/00, C09K 11/02

(54) **In fluorine-containing media homogeneously dispersible nanoparticles and media containing the same**
In Fluor enthaltendes Mittel homogen dispergierbare Nanoteilchen und Mittel enthaltend dieselben
Nanoparticles dispersibles de façon homogène dans une matière contenant du fluor et matière les contenant

(43) Date of publication of application: 23.06.2004
(73) Proprietor: Centrum für Angewandte Nanotechnologie (CAN) GmbH, 20146 Hamburg (DE)
(72) Inventor: Ibarra, Fernando, 20357 Hamburg (DE)
(74) Representative: HOFFMANN EITLE

(56) References cited:
- WO-A-02/20696
- SHAH P S ET AL: "Nanocrystal arrested precipitation in supercritical carbon dioxide" JOURNAL OF PHYSICAL CHEMISTRY B, 4 OCT. 2001, ACS, USA, vol. 105, no. 39, pages 9433-9440, XP002241295 ISSN: 1089-5647
- SHAH P S ET AL: "Role of steric stabilization on the arrested growth of silver nanocrystals in supercritical carbon dioxide" JOURNAL OF PHYSICAL CHEMISTRY B, 28 NOV. 2002, ACS, USA, vol. 106, no. 47, pages 12178-12185, XP002241296 ISSN: 1089-5647
- YONEZAWA T ET AL: "Formation of uniform fluorinated gold nanoparticles and their highly ordered hexagonally packed monolayer" LANGMUIR, 17 APRIL 2001, AMERICAN CHEM. SOC, USA, vol. 17, no. 8, pages 2291-2293, XP002241297 ISSN: 0743-7463

## Description

The present invention relates to a method for modifying the surface of nanoparticles in order to make them dispersible in fluorine-containing media, the surface modified nanoparticles obtained thereby and the fluorinated media containing the same.

### I. Description of the related art

Over the last decade nanoparticles, i.e. particles having sizes below 1 micrometer, have gained considerable interest in research and industry due to their unique properties.

In the case of nanocrystalline inorganic luminescent materials, these unique properties include an enhanced luminescence, which results from the localisation of electron-hole pairs or the suppressed concentration quenching of fluorescence in small particles. Further, the nanocrystalline state leads to materials having new magnetic properties such as very high permeability, but no magnetic hysteresis loss, materials with very high dielectric permeability and materials of enhanced reactivity and catalytic properties owing to the very high percentage of surface atoms.

AS to semi-conductor nanoparticles, quantum confinement of both the electron and hole in all three dimensions leads to an increase in the effective band gap of the material with decreasing crystalline size. Consequently it is possible to shift both the optical absorption and emission of semi-conductor nanoparticles to the blue (higher energies) as the size of the nanoparticles gets smaller.

In contrast thereto, it constitutes the particular attractivity of nanocrystalline non-semiconductor based luminescent materials, in particular rare earth metal compounds and rare earth metal-doped metal oxides or salts, that their fluorescent emission is relatively narrow and does essentially not depend from the host material and the size of the nanoparticles. It is rather only the type of rare earth metal, such as thulium, cerium, terbium, holmium, erbium, europium, samarium, neodymium, dysprosium, praeseodymium which primarily determines the emission colour. This is described for instance in US 6,309,701 relating to the synthesis of nanocrystalline rare earth metal-doped metal oxides operably bound to polymeric microspheres. Numerous examples for rare earth metal-doped metal salts are further found in PCT/DE 01/03433 assigned to the same applicant. This document discloses a generally applicable synthesis method for various nanoparticles, based on the use of a phosphorous- or nitrogen- containing crystal growth regulating solvent.

Nanoparticular transition metal oxides, such as titanium dioxide or zinc oxide are further used as UV absorbers.

Moreover, it is discussed in the scientific community (Peter J. Dobson, Paper for "Commercial and Industrial Applications for Micro-engineering and Nanotechnology", April 26th 1999, London) that nanoparticles may also enhance mechanical properties of the medium in which they are dispersed. The application of rare earth oxide fluoride nanoparticles as fibre re-inforcement of ceramic composites is also mentioned in US 6,316,377.

However, often nanoparticles lack sufficient dispersibility in the environment wherein they are finally to be used.

G. A. Hebbink, et al. describe in Adv. Materials, 2002, 14, No. 16, pages 1147 to 1150 lanthanide-doped nanaoparticles and their dispersion in a poly(methylmethacrylate) matrix. They further mention that these systems may be of interest for telecommunication components, lasers, polymer-displays and polymer LEDs.

A particularly interesting medium for various applications, in particular optical and/or electronic applications, are partially or completely fluorinated solvents or polymers. These differ from the corresponding non-fluorinated systems by their higher thermal and chemical stability, lower surface energies, dielectric constants and refractive indices and higher density.

The difference in refractive indices when combining fluorinated polymers with non-fluorinated polymers can for instance be used in optical applications.

Since most polymeric materials which contain carbon to hydrogen chemical bonds absorb strongly at the 1550 nm wavelength that is often used in telecommunication applications, the corresponding fluoro-polymers which have a significantly reduced absorption at 1550 nm are particularly attractive. US 6,306,563 (in the name of Corning & Co.), discloses for instance radiation-curable fluorinated compositions usable for optical devices such as optical waveguides and other optical interconnect devices.

The scientific articles by P.S. Shah et al. in J. Phys. Chem. B 2001, 105, 9433-9440 and J. Phys. Chem. B 2002, 106, 12178-12185 relate to fluorocarbon-coated silver, iridium and platinum nanocrystals, which have been synthesized by reducing soluble organometallic precursors in supercritical CO₂. The stabilizing fluorocarbon ligands bind to the surface of the metal agglomerates and thus determine particles growth, by a hindering steric layer. In addition it has been found that these coated nanoparticles can be redispersed in acetone and fluorinated solvents.

T. Yonezaea et al. describe in Langmuir 2001, 17, 2291-2293 the formation of fluorocarbon-stabilized gold nanoparticles, obtained by reduction of HAuCl₄, which are soluble only in fluorocarbon media.

WO 2004/046035 nanoparticles having a crystal lattice, or in the case of doping, a host lattice essentially consisting of Z sulphate (Z=magnesium (Mg), calcium (Ca), strontium (Sr) or barium (Ba)), which can be synthesized by crystal growth from a Z ion source and a sulphate ion source in a liquid phase synthesis mixture, containing a non-aqueous solvent such as glycerin, ethylene glycol, polyethylene glycols, polyalcohols or dimethyl sulfoxide (DMSO) with coordinating properties, which acts as a control component for particle growth, followed by the following after-treatment step: Heating the synthezied nanoparticles in the presence of a modification molecule for the surface of the nanoparticles, wherein the modification molecule is selected from a perfluorinated phosphate, a perfluorinated amine, a perfluorinated phosphonate, a perfluorinated phosphine, a perfluorinated phosphine oxide, a perfluorinated carboxylic acid, perfluorinated alcohols, perfluorinated organic esters, perfluorinated silanes, perfluorinated siloxanes, perfluorinated organic sulfones, perfluorinated organic ketones, perfluorinated organic nitriles, perfluorinated organic sulfoxides, perfluorinated organic amides.

WO 00/56837 relates to nanoparticulate rare earth element (REM) doped compositions, in particular halides, such as fluorides and their use in luminescent devices. In the examples of this document reactive atmosphere preparation of Pr and Dy doped LaF₃ and LaCl₃ is compared with solution techniques for the preparation of Pr, Er and Dy doped LaF₃. WO 00/56837 mentions also that these REM doped compositions can be used in non-IR absorbing polymers, such as poly(vinylfluoride), Teflon AF (an amorphous poly(vinylfluoride)) and Teflon PFA (a perfluoroalkyoxy copolymer). However, it is not disclosed how they are dispersed in these matrix systems.

In view of the unique properties of nanoparticles of semi-conductor and/or luminescent type which can be used for light amplification and light emission it is, therefore, of interest to find methods of increasing the dispersibility of nanoparticles in fluorinated media. This would create new applications in the area of light transmission and amplification or the conversion of light of a specific wavelength into another. These processes are typically used in laser techniques, in the communication technique and in high energetic light transmission processes, for instance in liquid light-transmitting media.

Further, it would be possible to make use of other interesting properties (mechanical properties, UV absorption, catalytic properties, etc.) of nanoparticles, in particular of the non-luminescent and non-semi-conductor type, when a technique of incorporating the same into fluorinated media could be found.

A third very interesting field of application lies in phase transfer processes where it can be desired to transfer the nanoparticles from non-fluorinated media (e.g. hydrocarbons or other non-fluorinated solvents) into fluorinated solvents.

One object of the present invention is therefore to provide new nanoparticles showing an increased dispersibility in fluorinated media.

A further object of the present invention involves providing a process for producing such nanoparticles.

Finally, the present invention aims at providing fluorinated media containing such particles in a dispersed state.

According to a preferred aspect of the present invention, the dispersibility of luminescent, in particular photoluminescent nanoparticles in visibly transparent media is to be increased to a degree that clear dispersions result.

### II. Summary of the Invention

The above technical objects are solved by:
a nanoparticle being dispersible in fluorine-containing medium comprising,
   an inorganic nanoparticle core, and
   an outer layer comprising an organic compound modifying the surface of the nanoparticle core and having a first portion comprising at least one linking group for the nanoparticle and a second portion comprising at least one fluorinated group, and
a process for preparing such nanoparticles, comprising the steps of
   providing the nanoparticles, and
   adding thereto the above surface-modifying organic compounds, and
a fluorinated medium containing the above defined surface-modified nanoparticles.

### III. Detailed Description of the Invention

Before the surface modification technique of the invention is disclosed in further detail, the nanoparticles to be modified and synthesis techniques for their production will be explained.

### IIIa. Nanoparticles to be modified

The modification technique of the present invention can be applied to various types of nanoparticles in terms of shape, size and chemical composition.

The shape of the nanoparticles can be for instance needle-like, or preferably ellipsoid-like or spheroidal. Typically they represent crystalline material (nanocrystals).

The nanoparticles to be used preferably have a size, measured along their longest axis, of 1 to 100 nm, more preferably maximally 50 nm. Sizes of maximally 20 nm, maximally 15 nm, maximally 10 nm, maximally 8nm and 4 to 5 nm are even more desirable. In each case the standard deviation is preferably less than 30 %, in particular less than 10 %.

In terms of chemical composition, a distinction shall be made between luminescent and non-luminescent materials. As "luminescent materials" we understand synthetically produced crystalline materials that absorb energy acting on them and subsequently emit this absorbed energy as light, either immediately ("fluorescence"), which is preferred in the present invention, or over a longer period of time (sometimes referred to as "phosphorescence"), in excess of thermal radiation. "Luminescence" arises from excited states in atoms or molecules having a lifetime of at least 10⁻⁹ sec. The absorbed energy can stem from cathode rays (cathodoluminescence), X rays (X ray luminescence), electrical field strength (electroluminescence), and preferably from low energy photons (photoluminescence). The most preferred materials absorb low energy photons and emit the absorbed energy as "fluorescence".

The nanoparticles to be used in the present invention are selected from:
1. Semiconductors of III-V type, such as GaAs, GaP, GaAsP, GaSb, InAS, InP, InSb, AlAs, AlP and AlSb or II-VI type, such as CdS, CdSe, CdTe, HgS, ZnS. The synthesis of such nanocrystalline semiconductors is for instance described in US 5,505,928. They can be used in a doped or undoped state and be of luminescent or non-luminiscent type;
2. non-doped metal oxides which are used as hard materials such as alumina or UV absorber such as titanium dioxide or zinc oxide; or luminescent non-doped metal oxides such as Eu₂O₃;
3. fluorescent, doped metal oxides, such as those described in US 6,309,701, including host metal oxide such as Y₂O₃, ZrO₂, ZnO, CuO, CuO₂, Gd₂O₃, Pr₂O₃, La₂O₃, and mixed oxides, being doped with at least one rare earth metal (hereinafter to be understood as Sc, Y, La and the elements 58 to 71), in particular Eu, Ce, Nd, Sm, Tb, Gd, Ho, and/or Tm;
4. non-doped metal salts wherein the anion is preferably selected from phosphates, halophosphates, arsenates, sulphates, borates, aluminates, gallates, silicates, germanates, vanadates, niobates, tantalates, tungstates, molybdates, alkalihalogenates, other halides (in particular fluorides), nitrides, sulphides, selenides, sulphoselenides, as well as oxysulphides. The metals preferably belong to the main groups 1, 2, 13, or 14, the subgroups 3, 4, 5, 6, 7, or the lanthanides. Preferred embodiments of non-doped metal salts comprise:
   phosphates of the corresponding number of metals (to ensure charge neutrality) selected from main group 2 (e.g. from Mg, Ca, Sr, Ba), group 3 (e.g. Sc, Y, La), or lanthanides (elements 58 to 71, i.e. Ce, Pr, Nd, Pm, Sm, Eu, Gd, Tb, Dy, Ho, Er, Tm, Yb and Lu);
   sulfates of the corresponding number of metals selected from group 2 (e.g. from Mg, Ca, Sr, Ba), group 3 (e.g. Sc, Y, La), or lanthanides (as above);
   borates of the corresponding number of metals selected from main group 2 (e.g. from Mg, Ca, Sr, Ba), group 3 (e.g. Sc, Y, La), or group 13 (Al, Ga, In, Tl) or lanthanides (as above);
   fluorides of the corresponding number of metals selected from group 2 (e.g. from Mg, Ca, Sr, Ba), subgroup 3 (e.g. Sc, Y, La), or lanthanides (as above);
   aluminates (e.g. Al₅O₁₂ or AlO₄) of the corresponding number of metal atoms selected from group 2 (e.g. from Mg, Ca, Sr, Ba), group 3 (e.g. Sc, Y, La), or lanthanides (as above);
   gallates (e.g. Ga₅O₁₂) of the corresponding number of metal atoms selected from group 2 (e.g. from Mg, Ca, Sr, Ba), group 3 (e.g. Sc, Y, La), or lanthanides (as above);
   silicates (e.g. SiO₃ or SiO₄) of the corresponding number of metals selected from group 2 (e.g. from Mg, Ca, Sr, Ba), group 3 (e.g. Sc, Y, La), group 12 (e.g. Zn, Cd) or lanthanides (as above);
   vanadates (e.g. VO₄) of the corresponding number of metal atoms selected from group 2 (e.g. from Mg, Ca, Sr, Ba), group 3 (e.g. Sc, Y, La), or lanthanides (as above);
   tungstates (e.g. WO₄) of the corresponding number of metal atoms selected from group 2 (e.g. from Mg, Ca, Sr, Ba), group 3 (e.g. Sc, Y, La), or lanthanides (as above);
   molybdates (e.g. MoO₄) of the corresponding number of metal atoms selected from group 2 (e.g. from Mg, Ca, Sr, Ba), group 3 (e.g. Sc, Y, La), or lanthanides (as above) ;
   tantalates (e.g. TaO₄) of the corresponding number of metal atoms selected from group 2 (e.g. from Mg, Ca, Sr, Ba), group 3 (e.g. Sc, Y, La), or lanthanides (as above);
   arsenates (e.g. AsO₄) of the corresponding number of metal atoms selected from group 2 (e.g. from Mg, Ca, Sr, Ba), group 3 (e.g. Sc, Y, La), or lanthanides (as above);
5. doped, preferably luminescent, in particular photoluminescent metal salts, wherein the above metal salts (including the above preferred embodiments) are doped with at least one other dopant metal. Of course, dopant metal and host metal must differ. The dopant metal is preferably selected from groups 1 (Li, Na, K, Rb, Cs), 2 (Be, Mg, Ca, Sr), Al, Cr, Tl, Mn, Ag, Cu, As, Nb, Ni, Ti, In, Sb, Ga, Si, Pb, Bi, Zn, Co and/or group group 3 (e.g. Sc, Y, La), or lanthanides (elements 58 to 71, i.e. Ce, Pr, Nd, Pm, Sm, Eu, Gd, Tb, Dy, Ho, Er, Tm, Yb and Lu). The dopant is preferably Eu, Ce, Nd, Sm, Tb, Gd, Ho, Tm, a combination of Ce and Tb or Ce and Dy being particularly preferred.

"Doping" is to be understood in a broad sense and includes substitution of the host metal in amounts up to 50, up to 20, up to 10, up to 5 or up to 1 mol%.

In the following some examples for preferred luminescent materials are given which can be used for the surface modification of the present invention:

LiI:Eu; NaI:Tl; CsI:Tl; CsI:Na; LiF:Mg; LiF:Mg,Ti, LiF:Mg,Na; KMgF₃:Mn; Al₂O₃:Eu; BaFCl:Eu; BaFCl:Sm; BaFBr:Eu; BaFCl_{0.5}Br_{0.5}:Sm; BaY₂F₈:A (A=Pr, Tm, Er, Ce); BaSi₂O₅:Pb; BaMg₂Al₁₆O₂₇:Eu; BaMgAl₁₄O₂₃:Eu; BaMgAl₁₀O₁₇:Eu; (BaMgAl₂O₄:Eu; Ba₂P₂O₇:Ti; (Ba, Zn, Mg)₃Si₂O₇:Pb; Ce(Mg, Ba)Al₁₁O₁₉; Ce_{0.65}Tb_{0.35}MgAl₁₁O₁₉; MgAl₁₁O₁₉:Ce,Tb; MgF₂:Mn; MgS:Eu; MgS:Ce; MgS:Sm; MgS(Sm, Ce); (Mg, Ca)S:Eu; MgSiO₃:Mn; 3.5MgO.0.5MgF₂GeO₂:Mn; MgWO₄:Sm; MgWO₄:Pb; 6MgOAs₂O₅:Mn; (Zn, Mg) F₂:Mn; (Zn, Be)SO₄:Mn; Zn₂SiO₄:Mn; Zn₂SiO₄:Mn,AS; ZnO:Zn; ZnO:Zn,Si,Ga; Zn₃(PO₄)₂:Mn; ZnS:A (A=Ag, Al, Cu); (Zn, Cd)S:A (A=Cu, Al, Ag, Ni); CdBO₄:Mn; CaF₂:Dy; CaS:A (A=lanthanides, Bi); (Ca, Sr)S:Bi; CaWO₄:Pb; CaWO₄:Sm; CaSO₄:A (A=Mn, lanthanides); 3Ca₃(PO₄)₂Ca(F, Cl)₂:Sb, Mn; CaSiO₃:Mn, Pb; Ca₂Al₂Si₂O₇:Ce; (Ca, Mg)SiO₃:Ce; (Ca, Mg)SiO₃:Ti; 2SrO6(B₂O₃)SrF₂:Eu; 3Sr₃(PO₄)₂.CaCl₂:Eu; A₃(PO₄)₂.ACl₂:Eu (A=Sr, Ca, Ba); (Sr,Mg)₂P₂O₇:Eu; (Sr, Mg)₃(PO₄)₂:Sn; SrS:Ce; SrS:Sm,Ce; SrS:Sm; SrS:Eu; SrS:Eu,Sm; SrS:Cu,Ag; Sr₂P₂O₇:Sn; Sr₂P₂O₇:Eu; Sr₄Al₁₄O₂₅:Eu; SrGa₂S₄:A (A=lanthanides, Pb); SrGa₂S₄:Pb; Sr₃Gd₂Si₆O₁₈:Pb,Mn; YF₃:Yb,Er; YF₃:Ln (Ln=lanthanides); YLiF₄:Ln (Ln=lanthanides); Y₃Al₅O₁₂:Ln (Ln=lanthanides) ; YAl₃(BO₄)₃ :Nd, Yb; (Y,Ga)BO₃:Eu; (Y, Gd) BO₃:Eu; Y₂Al₃Ga₂O₁₂:Tb; Y₂SiO₅:Ln (Ln=lanthanides); Y₂O₃:Ln (Ln=lanthanides); Y₂O₂S:Ln (Ln=lanthanides);YVO₄:A (A=lanthanides, In); Y(P,V)O₄:Eu; YTaO₄:Nb; YAlO₃:A (A= Pr, Tm, Er, Ce); YOCl:Yb,Er; LnPO₄:Ce,Tb (Ln=lanthanides or mixtures of lanthanides); LuVO₄:Eu; GdVO₄:Eu; Gd₂O₂S:Tb; GdMgB₅O₁₀:Ce, Tb; LaOBrTb; La₂O₂S:Tb; LaF₃:Nd, Ce; BaYb₂F₈:Eu; NaYF₄:Yb,Er; NaGdF₄:Yb, Er; NaLaF₄:Yb,Er; LaF₃:Yb,Er,Tm; BaYF₅:Yb,Er; Ga₂O₃:Dy; GaN:A (A= Pr, Eu, Er, Tm); Bi₄Ge₃O₁₂; LiNbO₃:Nd, Yb; LiNbO₃:Er; LiCaAlF₆:Ce; LiSrAlF₆:Ce; LiLuF₄:A (A= Pr, Tm, Er, Ce); Gd₃Ga₅O₁₂:Tb; Gd₃Ga₅O₁₂:Eu; Li₂B₄O₇:Mn; SiOₓ:Er,Al (0<x<2), or MgF₂:Mn; ZnS:Mn; ZnS:Ag; ZnS:Cu; CaSiO₃:A; CaS:A; CaO:A; ZnS:A; Y₂O₃:A; or MgF₂:A, wherein A is an element of the lanthanides.

Among these the more preferred embodiments are: YVO₄:Eu; YVO₄:B,Eu; YVO₄:Sm; YVO₄:Dy; LaPO₄:Eu; LaPO₄:Ce; LaPO₄ : Ce, Tb; YbP0₄:Er, LaPO₄:Yb, Er; LaPO₄:Nd; NdPO₄; LaPO₄:Ce,Nd; ZnS:TbF₃; ZnS:Eu; ZrS:EuF₃; Y₂O₃:Eu; Y₂O₂S:Eu; Y₂SiO₅:Eu; SiO₂:Dy; SiO₂:Al; Y₂O₃:Tb; CdS:Mn; ZnS:Tb; ZnS:Ag; ZnS:Cu; Ca₃(PO₄)₂:Eu²⁺; Ca₃(PO₄)₂:Eu²⁺, Mn²⁺; Sr₂SiO₄:Eu²⁺; BaAl₂O₄:Eu²⁺, or BaAl₂O₄:Eu²⁺; LaF₃:Nd; LaF₃:Ce,Nd; LaF₃ :Yb, Er ; YF₃:Yb,Er; YF₃:Yb, Ln (Ln= Er,Tm,Ho,Sm,Pr) or CaF₂:Eu²⁺.

It should be noted that the doped metal salts and oxides are preferably of non-semiconductor type since nanocrystalline semiconductor materials show quantum effects which makes their colour dependent from their average size and size distribution. This is undesired for a high reproducibility as required for luminescent materials.

### IIIb. Synthesis of nanoparticles

Methods for making nanoparticles involve dry and wet methods.

One suitable dry method is the spray pyrolysis as described in WO 00/38282 for ultrafine rare earth metal (REM)-doped metal oxides.

Applicable wet methods are known to include, but are not limited to sol-gel processes or organometallic processes (US 6,309,701 for fluorescent, REM-doped metal oxides), hydrothermal synthesis, glycothermal synthesis or the organic synthesis with "crystal growth regulating" substances, the latter three techniques being preferred in the present invention.

The **"Hydrothermal synthesis"** of **metal salts** (resulting in spheroidal or needle-shaped nanoparticles) is described for instance in 'Wet-Chemical Synthesis of Doped Colloidal Nanomaterials: Particles and Fibers of LaPO4:Eu, LaPO4:Ce, and LaPO4:Ce,Tb' by Meyssamy H., Riwotzki K., Kornowski A., Naused S., and Haase M., published on July 5th, 1999, in Advanced Materials (1999), Vol. 11, No. 10, p 840ff. Using a wet-chemical synthesis of the starting materials in water (hydrothermal synthesis) it is possible to make undoped or doped nanoparticles as colloidal "solution" in water. The reaction is performed in an autoclave to maintain the high pressure (typically from 10 to 20 bar) during the reaction. The reaction temperatures preferably range from 100 to 350°C. A hydrothermal method for forming needle-shaped rare earth metal oxide fluorides is disclosed in US 6,316,377. Examples for a hydrothermal synthesis techniques can also be found in PCT/DE 01/03433.

Further steps of the "hydrothermal synthesis" method include precipitation followed by centrifugation which allows the preparation of a solid as a concentrate.

The hydrothermal synthesis results in relatively large particles which often have needle-like shape. Further, a broad distribution of particle sizes typically characterizes the product. In the above-named method by H. Meyssamy, the percentage of nanoparticles with diameters of less than 25 nm is for instance around 20%.

The nanoparticles to be modified may also be produced according to the so-called **"glycothermal synthesis"** using a diol (preferably an alkylendiol having from 2 to 8 carbon atoms) as solvent and working under pressure and high temperatures (e.g. from 150 to 300 °C). Examples for a synthesis of aluminates and gallates in 1,6-hexanediol as solvent can be found in PCT/DE 01/03433. The disclosures of the following publications may also be consulted for the production of nanocrystalline gallates and aluminates, respectively:

"Synthesis of Rare Earth Gallium Garnets by the Glycothermal Method", by Inoue, M. et al., in Journal of the American Ceramic Society, Vol. 81 No. 5, pp 1173 - 1183;

"Synthesis of submicron spherical crystals of gadolinium garnets by the glycothermal method", by Inoue, M. et al., in Journal of Materials Science Letters 14 (1995), pp 1303 - 1305;

"Synthesis of Yttrium Aluminium Garnet by the Glycothermal Method", by Inoue, M. et al., in Communications of the American Society, Vol. 74, No. 6, pp 1452 - 1454; and

"Reactions of rare earth acetates with aluminium isopropoxide in ethylene glycol: Synthesis of the garnet and monoclinic phases of rare earth aluminates", by Inoue, M. et al., in Journal of Materials Science 33 (1998), pp 5835 - 5841.

Similarly as the hydrothermal synthesis, the glycothermal synthesis also leads to nanoparticles comprising fairly large particles and having a broad size distribution.

Hydrothermal and glycothermal synthesis are preferably employed in the production of aluminates, gallates, silicates, germanates, vanadates, niobates, tantalates, wolframates, and molybdates.

According to a further method referred to as **organic synthesis**", the process for the preparation of a nanocrystalline metal salt preferably involves the following steps:
a) reacting, in an organic reaction medium comprising a solvent mixture comprising at least one crystal growth-controlling organic solvent, and optionally at least one further solvent, a reaction medium-soluble or -dispersible metal source and a reaction medium-soluble or -dispersible anion source,
b) optionally removing the reaction medium from the nanocrystalline metal salt formed thereby, and
c) optionally recovering the nanocrystalline metal salt.

The reaction medium can be removed by distillation, centrifugation or ultrafiltration. In contrast to the glycothermal method, this reaction medium does not require the presence of a diol.

Steps b and c are not essential in the present invention, if the fluorine-containing surface modifier has a stronger affinity to the nanoparticle surface than the reaction medium used for the "organic synthesis". Then it may directly be added to the reaction medium without prior isolation of the nanoparticles.

Depending on the susceptibility of the metal source to oxidation, it is preferred to conduct the reaction under inert gas, such as nitrogen or argon.

Regarding the degree of purity of starting materials it is preferred to use metal salts having a purity of at least 99,9 % as metal source of the nanoparticle to be produced. All reactants and the solvents used are preferably water-free and/or are dried prior to use. However, metal chlorides which are frequently employed as hydrates should preferably not be subjected to a longer drying procedure since this may enhance the formation of reaction medium-insoluble oxychlorides.

The reaction is preferably conducted at a temperature of from 120 to 320 °C, in particular 180 to 290°C. A suitable temperature can be easily determined by a skilled person by monitoring the reaction of the reactants at gradually increasing temperatures thereby determining the "synthesis minimum temperature" at which the reaction proceeds with sufficient speed. This can be done for instance by precipitating the nanoparticles from samples of the reaction medium and studying the particle growth with increasing reaction time

Suitable reaction times can be determined in the same manner and typically range from 10 min to 48 hours, in particular 30 min to 20 hours.

After completion of the reaction, the reaction mixture is cooled down to room temperature. If the nanoparticles have not yet fully precipitated during the reaction time or after cooling, it is possible to add methanol in order to obtain maximum yields.

Without being bound to theory, it is believed that the "Crystal growth-controlling organic solvent" coordinates with the nanoparticles formed and thereby terminates their growth after a certain crystal size has been reached.

It leads to fairly small particles (preferably ≤10 nm), ≤8 nm, e.g. 4 to 5 nm) with narrow size distribution (standard deviation ≤30%, ≤10%). The "crystal growth-controlling organic solvent" is characterized by the presence of a polar group capable of linking to the metal salt and at least one second molecule portion (less polar, preferably hydrophobic), for instance aliphatic, aromatic/aliphatic or purely aromatic molecule portion having preferably 4 to 20, in particular 6 to 14 carbon atoms. The number of second molecule portions is limited by the valency of the polar group (e.g. one for substituted phosphates and up to three, but preferably one or two for amines). The presence of one polar and at least one hydrophobic molecule portion (typically at opposite ends of the molecule) entails surfactant-like properties for the "crystal growth-controlling organic solvent".

The "crystal growth-controlling organic solvent" is preferably a phosphororganic compound or a mono- or disubstituted amine. The most preferred embodiments can be described as follows:
- mono- or dialkylamine wherein the alkyl residue preferably has from 4 to 20, in particular 6 to 14 carbon atoms, such as dodecylamine or bis(ethylhexyl)amine,
- among the phosphororganic compounds at least one of the following substances:
   a) esters of phosphinic acid, ((R₁-)(R₂-) (R₃-O-)P=O),
   b) diesters of phosphonic acid, ((R₁-)(R₂-O-)(R₃-O-)P=O),
   c) triesters of phosphoric acid (trialkyl phosphates), ((R₁-O-)(R₂-O-)(R₃-O-)P=O), such as tributylphosphate or tris(ethylhexyl)phosphate,
   d) trialkyl phosphines, ((R₁-)(R₂-)(R₃-)P), particularly trioctylphosphine (TOP),
   e) trialkyl phosphine oxides, ((R₁-)(R₂-)(R₃-)P=O), particularly trioctylphosphine oxide (TOPO).

R₁, R₂, R₃ are preferably selected from branched or linear aliphatic (preferably alkyl), aliphatic-aromatic or aromatic residues having from 4 to 20, more preferably 6 to 14, in particular 8 to 10 carbon. Examples for aromatic residues are phenyl. Aromatic-aliphatic residues can be exemplified by tolyl, xylyl, or benzyl.

The use of phosphororganic compounds (a) to (c) is more preferred. This applies in particular to those wherein R₁, R₂, R₃ are each alkyl having the above-mentioned carbon numbers.

The "crystal growth-controlling organic solvent" is preferably used in amount of at least 10 mol% based on the molar amount of the metal atom(s) used a metal source, if it represents the sole solvent. A preferred upper limit may be 1000 mol%.

Depending on the choice of the "crystal growth-controlling organic solvent" , e.g. trialkyl phosphate or trialkyl phosphine, respectively, and particularly on the length of the alkyl residue, however, the use of such large amounts may be inconvenient, since the substances are very expensive or necessitate a laborious synthesis. Further, the precipitation from the pure "crystal growth-controlling organic solvent" may be incomplete.

Therefore, it is preferred to use additionally "at least one further solvent". In this embodiment, the "crystal growth-controlling organic solvent" is preferably used in a molar amount of less than 10 mol, more preferred 0.9 to 5 mol, and even more preferred 0.95 to 1.5 mol, based on the metal ion(s) used as metal source. The amount of the "at least one further solvent" is preferably from 0,5 to 10 mol.

The "at least one further solvent" should be miscible with the crystal growth controlling organic solvent" (at least at the synthesis temperature, preferably also at room temperature (20°C)) and have a boiling point (at ambient pressure (1013 mbar)) above the synthesis minimum temperature, preferably a boiling point above 150°C, more preferably above 180°C, most preferred above 210 °C. A boiling point above 400°C can be undesired.

The "at least one further solvent" can be hydrocarbon-based or have at least one polar group. The use of the latter is preferred, if water of crystallization is present in the metal salt starting compounds and said water is to be replaced by a solvent which is capable of coordinating to the metal. The solvent is preferably selected from
- a solvent having at least one ether functionality; in particular dialkylethers having from 5 to 10 carbon atoms per alkyl group, such as dipentyl ether, dihexyl ether, diheptyl ether, dioctyl ether, dibenzyl ether, diisoamyl ether; diaryl ethers or diaralkyl ethers, having in total from 12 to 18 carbon atoms, such as diphenyl ether or dibenzylether; or mono- or diethylene glycol dialkylether, such as diethylene glycol dibutyl ether, diethylene glycol dibutyl ether, and/or
- branched or unbranched alkanes, which preferably have from 10 to 18 carbon atoms, in particular 12 to 16 carbon atoms, such as dodecane or hexadecane, and/or
- an organic high-boiling base, preferably an N-containing aliphatic or N-containing aromatic base, most preferably a trisubstituted amine, in particular trialkylamine compounds having from 5 to 10 carbon atoms per alkyl group, such as trioctylamine or tris(2-ethylhexyl)amine.

They also may be used in combination.

These bases may not only serve as solvent. The organic high-boiling base can also function as acid scavenger, for instance if an acid such as phosphoric acid is employed as anion source. Then it may be preferred to use the base in an approximately equimolar amount with respect to the acid hydrogens.

The "cation source" can be selected from any suitable (sufficiently reactive) metal salt, but is preferably a metal chloride, metal alkoxide (wherein the alkoxide preferably has from 1 to 6 carbon atoms, in particular 1 to 4 carbon atoms), a metal nitrate or a metal acetate. Hydrated metal salts may also be used.

The "anion source" is preferably selected from:
a. free acids of the salts of the particular metal salt nanoparticles which are to be prepared, or
b. salts that are soluble or at least dispersible in the synthesis mixture, in particular salts with an organic cation, or metal salts, the latter preferably being alkali metal salts, or
c. organic compounds which release the anion beyond an increased synthesis minimum temperature, and a suitable, anion-donating substance is selected from the class of substances depending on a respective selection of the salt of the nanoparticles to be prepared as further explained in PCT/DE 01/03433.

As to item a), it is for instance possible to use in the the "organic synthesis" phosphoric acid as anion source for the preparation of nanoparticles with phosphorus-containing anions, boric acid as anion source for the preparation of nanoparticles with boron-containing anions, and hydrofluoric acid as anion source for the preparation of nanoparticles with fluorine-containing anions.

Option b) involves the preferred use of an organic salt comprising the anion and an organic cation, e.g. a protonated organic base in the corresponding molar amounts. The anion is that of the nanoparticle to be produced, e.g. fluoride, phosphate, sulfide or sulfate or a hydrogenated form thereof (e.g. dihydrogenphosphate, hydrogen sulfate) .

The cation is preferably seleted from basic N-containing aliphatic, aromatic and aliphatic/aromatic substances which preferably have from 4 to 30, preferably 4 to 20 carbon atoms.

Suitable cations involve tetraalkylammonium wherein each alkyl group independently may have from 1 to 5 carbon atoms or protonated aromatic bases such as pyridine or collidine. For example, to prepare nanoparticles with phosphate-containing anions, tetrabutylammonium dihydrogenphosphate, tetramethylammonium dihydrogenphosphate, or triethylammonium dihydrogenphosphate used as anion source; to prepare nanoparticles with sulphate-containing anions, tetrabutylammonium hydrogensulphate, tetramethylammonium hydrogensulphate, bis-tetrabutylammonium sulphate, or triethylammonium hydrogensulphate can be used; to prepare nanoparticles with fluorine-containing anions, triethylamine-trishydrofluoride, pyridine hydrofluoride, or collidine hydrofluoride can be used; and to prepare nanoparticles with sulphide-containing anions, collidine hydrosulfide can be used as anion source.

Further details regarding suitable reactants and other synthesis conditions of the organic synthesis can be taken from PCT/DE 01/03433.

The organic synthesis can also be used for the synthesis of halophosphates, alkalihalogenates, other halides (in particular fluorides), nitrides, sulphides, selenides, sulphoselenides, as well as oxysulphides. It is preferably employed in the synthesis of phosphates, arsenates, sulfates, borates, and fluorides.

### IIIc. Surface-Modified Nanoparticles and the Surface Modification Technique

It is an essential feature of the present invention that the surface of the above illustrated nanoparticles is modified with an organic compound having a first portion comprising at least one linking group for the nanoparticles and a second portion comprising at least one fluorinated group.

The above-described nanoparticles which are to be dispersed in a fluorinated-medium, are typically polar compounds, either due to their ionic character or the presence of polar covalent bonds. Therefore, it is preferred that the linking group is a polar group. "Polar groups" can be groups capable of donating electron pairs ("Lewis bases") such as hydroxy or ether oxygen, N- or trivalent P-containing compounds, and/or neutral groups having a sufficiently high electric dipolmoment for linking to the nanoparticle, or ionic compounds such as ammonium or carboxy.

The polar group is preferably selected from hydroxy, carboxylic acid, carboxylic ester, ether oxygen, amine or amino, amide, nitril or cyano, phosphoric acid or phosphoric acid ester, phosphonic acid or phosphonic acid ester, phosphinic acid or phosphinic acid ester, or phosphane, phospane oxide, sulfuric acid or sulfate, sulfonic acid or sulfonic acid ester, thiol or di-substituted sulfide.

The polar group, thus, can be monovalent (e.g. hydroxy, carboxylic acid) divalent (e.g. ether oxygen), trivalent (phosphor esters) or tetravalent (amino).

The resulting preferred type of surface modifier is represented below by the formulae in brackets.
- hydroxy (HO-R₁), also including phenols,
- carboxylic acid (HOOC-R₁),
- carboxylic ester (R₄OOC-R₁),
- ether oxygen (R₂-O-R₁),
- amine (H₂N-R₁ or HN(R₁)₂(R₂))
- amino ((R₅)₃N⁺-R₁)),
- amide ((R₅)₂NOC-R₁),
- nitrile (CN-R₁) or cyano (NC-R₁),
- phosphoric acid ester or the corresponding mono- or diacids ((R₁-O-)(R₂-O-)(R₃-O-)P=O)),
- phosphonic acid ester or the corresponding mono acid ((R₁-)(R₂-O-)(R₃-O-)P=O)),
- phosphinic acid ester ((R₁-)(R₂-)(R₃-O-)P=O)),
- phosphanes ((R₁-)(R₂-)(R₃-)P)),
- phosphane oxide, ((R₁-)(R₂-)(R₃-)P=O)),
- sulfates (R₁O-SO₂-OR₂) or the corresponding mono acid,
- sulfonic acids (R₁-SO₂-OH) or sulfonic acid esters (R₁-SO₂-OR₄),
- thiol, (HS-R₁), or
- disubstituted sulfide (R₂-S-R₁);
wherein R₁, R₂ and R₃ are independently selected from fluorinated organic groups, preferably fluorinated aliphatic, mixed aromatic/aliphatic or aromatic groups. Preferably aliphatic groups are used which can be branched or linear, acyclic or cyclic. The use of linear alkyl groups is particularly preferred. R₁, R₂ and R₃ preferably have carbon numbers not higher than 20, in particular not higher than 14 (e.g. 10).

R₄ and R₅ can have the same meaning as R₁, R₂ and R₃, but may also represent fluorine-free lower alkyl (e.g. C₁, C₂, C₃ or C₄) in the case of R₄, or hydrogen or fluorine-free lower alkyl (e.g. C₁, C₂, C₃ or C₄) for R₅.

Further, heteroaromatic compounds having at least one oxygen or nitrogen atom and preferably up to 20 (e.g. up to 12) carbon atoms, such as pyridine may be used.

The use of (hetero)aromatic groups may then be undesired, if they absorb in the wavelength range of the light acting upon the nanoparticle or emitted thereby. The same applies of course to other light absorbing groups. If the nanoparticles are to be used for light absorption and emission, a skilled person will be in the position to chose among the available surface-modifiers those which show the least interaction with the light absorbed or emitted.

Further, it is to be taken into consideration that it is desirable to increase, as far as possible, the number of surface-modifying molecules per nanoparticle, and thereby the number of fluorinated groups interacting with the fluorinated medium. If the surface modifier therefore contains sterically bulky units, such as aromatic groups or branched units, these should preferably not be located in vicinity to the linking group, but rather at or close to the end(s) lying opposite to the linking group. Correspondingly, it will be preferred to fluorinate these groups, if they are present.

Generally, it is preferred to use a liquid (at 20°C) surface modifier, in order to facilitate the removal of excess amounts after the surface modification has been completed. If solid surface modifiers are used, they should preferably have a relatively low melting point, for instance below 40°C.

In order to fulfil these requirements, it is preferred that the total number of carbon atoms in the surface modifier does not exceed 24. More preferred carbon ranges are from 6 to 20 and 8 to 14 (e.g. 10 or 12).

The surface modifier used comprises at least one fluorinated group.

The expression "fluorinated group" is used in the present invention preferably for those groups based on a carbon chain to each carbon atom of which at least one fluorine atom is attached.

The expression "fluorinated", as used hereinbefore, always includes partly fluorinated groups having fluorine contents of at least 50 mole % based on the total number of hydrogen and fluor atoms present in the fluorinated group, and completely fluorinated units (also referred to as "perfluorinated").

The fluorinated group preferably has at least two carbon atoms. More preferred lower limits involve at least 3, 4, 5, 6, 7, 8 carbon atoms depending on the overall size (carbon number) of the organic surface modifier. A theoretical upper limit for the number of carbon members is the total number of carbon atoms in the surface modifier (if the polar group does not contain C-containing units which cannot be fluorinated such as carboxy ester or carboxy amide). Preferred upper limits are, however, maximally 16, 14 or 12 with increasing preference.

Depending on the type of medium in which the nanoparticles are to be dispersed, in particular its degree of fluorination, a corresponding increase in the degree of fluorination within the organic surface modifier is preferred. According to preferred embodiments, the overall fluorine content of the organic surface modifier, in mole % based on the total number of hydrogen and fluorine atoms can therefore be at least 50%, at least 60%, at least 70%, or at least 80% with increasing preference.

In order to ensure an optimal interaction between the surface modifier and the fluorinated medium, it is further preferred that the fluorinated group is located at the opposite end(s) of the organic modifier with respect to the linking group.

As "opposite end(s)" we understand that distal end of the organic residue(s) substituting the linking group which is not covalently bonded thereto. Monovalent polar groups such as hydroxy thus have only 1 "opposite end", bivalent groups have 2 and so on.

Experiments with perfluorinated surface modifiers, such as perfluorodecan-1-ol have shown that the presence of fluorine atoms in close vicinity (in alpha or beta position) to the linking group may decrease its reactivity (linking capacity) due to the electron withdrawing effect of the fluorine atoms. This may not be detrimental, if the linking group has a relatively high electron density. However, if such a decrease in reactivity is observed, it is generally preferred to employ organic modifiers having a non-fluorinated spacer between the linking group and the fluorinated group. This spacer can be suitably selected according to the overall size (in particular carbon number) of the organic residues substituting the linking group. Preferably the spacer chain consists of at least two atoms, in particular carbon atoms. The maximum chain length of the spacer can be determined according to the desired degree of fluorination which as mentioned is preferably at least 50 mole %.

Many examples of the above-described preferred embodiments for the surface modifier are commercially available, including fluorinated carboxylic acids, fluorinated alkanols, fluorinated carboxylic acid esters, fluorinated sulfonic acids. Other compounds can be synthesised according to methods known in the art of fluorine chemistry or analogous methods.

A class of compound being preferred for the performance of the present invention are fluorinated alkanols of the following formula:

HO-(CH₂)ₓ (CF₂)_{y} (CF₃)

wherein x and y are integers, x is at least 2, x+y+1 is from 6 to 20, y/x is at least one, preferably at least 2, more preferably at least 3, more preferably at least 4.

The process for the preparation of the surface-modified nanoparticles of the invention comprises the steps of:
- providing nanoparticles (in the manner explained before), and,
- adding thereto the above described organic surface modifier.

The organic surface modifier can be added solely or in combination with compatible solvents to the nanoparticles. "Compatible" means that the other solvent completely dissolves the surface modifier, at least at higher temperatures. The other solvent may for instance be a suitable fluorinated hydrocarbon.

Depending on the synthesis conditions of the nanoparticles to be modified, they may already have a layer of molecules (a solvent, e.g. a crystal growth controlling solvent in the case of the so-called "organic synthesis") which may impede an effective surface modification. Then, it will become necessary to replace the already existing layer by the layer of fluorinated surface modifying agents in accordance with the invention.

Therefore, but also to increase the velocity of the linking process, it can be desired to perform the surface modification at higher temperatures, for instance, at a temperature of from 100 to 300°C, preferably 150 to 250°C.

It is possible, but not necessary to conduct the reaction under elevated pressure.

Although less than the equimolar amount of surface modifier may be sufficient to modify the surfaces of the nanoparticle, it should be taken in to account that nanoparticles can have a fairly high number of atoms (e.g. approximately a third depending on the size of the nanoparticles) located at the surface when compared with bulk materials. Therefore, it is generally preferred to use at least 0,5 mol to 10 mol, in particular 0,9 to 2 mol with respect to the molar amount of the metal in the nanocrystalline material.

In order to increase the reactivity of linking groups having acid hydrogen atoms, such as hydroxy, carboxy, amine, partial phosponic acid esters or phosphoric acid esters, bases can be added. If the solubility/miscibility of the reacting copounds is too low, a surfactant or emulsifier other than the so-called "surface-modifier" can be added. Suitable surfactants or emulsifier can be selected from commercially available ionic or nonionic fluorinated surfactants (e.g. some examples of Zonyl^{®} surfactants available from DuPont). "Surface-modifier" and/or surfactant/emulsifier can also be admixed to enhance the stability of the final dispersion including the surface-modified particles and the fluorinated medium.

The surface-modification can be monitored by injecting small volumes of the treatment mixture into a fluorinated solvent, such as perfluorohexane, perfluorobutyltetrahydrofurane or perfluoroethylen glycol. If prior to the surface treatment of the invention, the nanoparticles resulted in a cloudy, colloidal dispersion in the fluorinated solvent, or even precipitated from the fluorinated solvent, and afterwards the transparency has increased, or more desirably a clear dispersion (quasi-solution) is obtained, surface modification has taken place. The surface modification may also be assessed with respect to the homogeneity or stability of the dispersion, for instance based on a reduced tendency of the particles to deposit.

After cooling the reaction mixture to room temperature, the surface modified nanoparticles can be isolated with the following techniques:
- distilling off the excess of organic surface modifier (and, if necessary the solvent),
- precipitating the nanoparticles by adding a further solvent which decreases the dispersibility of the modified nanoparticles in the mixture obtained.
- Ultrafiltration through membranes with a pore size corresponding to 1000 Da or 500 Da. Typically a pressure of 2 to 5 bar is necessary to change the solvents in an adequate cell.

In each case it may be preferred to wash the nanoparticles obtained.

The isolated modified nanoparticles show an improved dispersibility in fluorinated media, when compared with the corresponding non-modified particles.

The expression "dispersibility" means the ability to form dispersions in a fluorinated medium, where the particles do not immediately flocculate and sediment due to the formation of larger aggregates. These "dispersions" may be transparent, if the nanoparticles dispersed have an average particle size no longer interacting with visible light (about 30 nm or less) .

It is possible to detect (visualize) by suitable spectroscopic methods (e.g. luminescence spectrography) the presence of surface-modified nanoparticles of the present invention in clear dispersions in a fluorinated medium.

### Fluorinated Medium Containing Surface-Modified Nanoparticles

Depending on the type of application, a suitable amount of nanoparticles to be incorporated into the fluorinated medium is selected.

Preferably, the fluorinated medium contains as dispersion from 0.1 to about 50 weight % of the surface-modified nanoparticles, more preferably from 1 to 20 weight %, in particular from 5 to 10 weight %, based on the weight of the fluorinated medium.

For luminenescent applications the matrix (medium) ist preferably selected to be optically transparent to wavelengths at which excitation, fluorescence or luminescence of the luminescent nanoparticles occurs.

If applications of luminescent nanoparticles are envisaged, for instance, as light amplifier or emitter, the fluorinated medium preferably contains from 5 to 20 weight % nanoparticles, based on the weight of the fluorinated medium.

The fluorinated medium preferably represents a fluorinated solvent (being liquid or solid at 20°C) or polymer (being liquid or preferably solid at this temperature) whereas the term "fluorinated" is to be understood as partially fluorinated or per-fluorinated.

The expression "partially fluorinated" is intended to mean in the context of the fluorinated medium, media having preferably a fluorination degree of at least 50 mole %, based on the total mole number of hydrogen and fluorine atoms, more preferably at least 60, at least 70 or at least 80 mole %.

The fluorinated medium is preferably selected from hydrocarbons of aliphatic or aromatic type, heteroaromatic compounds primary, secondary or tertiary alcohols, polyalcohols, carboxylic acids, carboxylic acid esters, dialkyl ethers, primary, secondary, or tertiary amines, quaternary ammonium salts, polyamines, amides, nitrides, glycols, organic phoshoric acid triesters, as well as the corresponding mono- or diacids acids, organic phosphonic acid di-esters as well as the corresponding mono acids, organic phosphinic acids, trialkyl phosphanes, trialkyl phosphane oxides, organic sulfates as well as the corresponding acids, organic sulfonates as well as the corresponding acids, thiols and dialkyl sulfides.

Among the above components, the following classes of compounds are preferred: primary, secondary or tertiary alcohols, polyalcohols, primary, secondary or tertiary amines, polyamines and glycols.

As seen from the above enumeration, the medium may be identical with the above described fluorinated surface modifier, although this is not necessary or particularly preferred. At any rate, reference is also made to the above given more detailed description of preferred surface-modifiers.

Each of the above-defined classes of fluorinated media may be liquid or solid (at 20°C) which, as known in the art, depends to a great deal from the carbon number, but is preferably liquid.

All these fluorinated media are organic compounds which may have linear or branched aliphatic, alicyclic, heterocyclic aromatic and/or heteroaromatic residues.

The surface modification of the present invention opens up various applications where the use of nanoparticles in fluorinated solvents can be of interest. If fluorinated polymers are to be produced from a solution of fluorinated monomers, nanoparticles which are to impart specific properties to the final polymer can be incorporated into the monomer mixture.

If the corresponding nanocrystalline metal oxide or salt exerts a catalytic effect, it will now be possible to increase the dispersibility of nanoparticles in a reaction mixture containing or consisting of fluorinated reactants.

The unique properties of fluorinated surfaces may also be used to finely disperse the nanoparticles as dust (for application as aerosol or in gas phase processes). The reduced interaction of fluorinated surfaces with water and moisture can prevent their aggregation and flocculation in such processes.

The fluorinated polymer can be selected from, but is not limited to, thermoplastic, elastomeric (cross-linked or not) and elastoplastic materials.

Usable thermoplastic fluoro-polymers include, but are not limited, to
- polytetrafluorethylene (PTFE),
- tetrafluoroethylene(TFE)-hexafluoropropene(HFP) polymers (FEP),
- and tetrafluoroethylene(TFE)-perfluoro(propylenevinyl ether) (PPVE) copolymers (PFA),
- TFE-ethylene copolymers (ETFE),
- polychlorotrifluoroethylene (PCTFE),
- CTFE (chlorotrifluoroethylene)-ethylene copolymers (ECTFE),
- poly(vinylfluoride)(PVF),
- poly(vinylidenefluoride (PVDF) and
- copolymers of VDF (vinylidenefluoride).

The surface-modified nanoparticles can be incorporated into these thermoplastic fluoropolymers by techniques as used and known in the art for the incorporation of filler materials, for instance, by melt kneading. Since the high melt viscosity of PTFE resins prevents processing by conventional extrusion and moulding techniques, sintering techniques are preferably used. The nanoparticles can be blended dry with the PTFE powder before sintering or can be coagulated with the dispersion to produce a filled fine powder. With other thermoplastic fluoropolymers having a lower melt viscosity, conventional kneading, extrusion and moulding techniques can be used.

Of particular interest for optical applications are transparent fluoro-polymers such as FEP resins which are presently used in solar collector windows because of their excellent weatherability and high solar transmission. PFA resins are also known to have good optical properties and are colorless and transparent in thin sections.

Fluorine containing elastomers are designed to maintain their elasticity under severe conditions including high temperature. They include, but are not limited to fluorocarbon elastomers, fluorosilicons and fluoroalkoxyphosphazines. Preferred embodiments of fluorocarbon based elastomers are VDF-HFP, VDF-HFP-TFE or VDF-PMVE-TFE wherein VDF is vinylidene fluoride, HFP is hexafluoropropene, TFE is tetrafluoroethylene and PMVE is perfluoro(methylvinylether). Besides the above mentioned elastomers based on vinylidine fluoride, elastomers based on tetrafluoroethylene-perfluoro(methylvinylether) or tetrafluoroethylene-propylene copolymers can be mentioned.

Generally, it is preferred to incorporate the nanoparticles into the fluoroelastomer preparation before cross-linking (vulcanisation). Standard rubber compounding equipment can be used for mixing, such as Banbury and other internal mixers, which are suited for preparing pre-compounds containing the nanoparticles.

According to one preferred embodiment, the surface-modified nanoparticles are dispersed in a suitable fluorinated solvent, which is capable of dissolving the fluorinated polymer to be used as matrix. The dispersion of nanoparticles is then mixed with the polymer, either by adding thereto the polymer in an appropriate form, e.g. as powder or granulate to the dispersion or the other way around. Upon evaporation of the solvent, the polymer will form a solid phase containing homogenously dispersed particles. The solid material obtained thereby can be cast to form a film on surfaces, extruded to (optical) fibres or pressure-moulded to a formed article, e.g. to a construction element as used in a luminescent device.

For optical application, e.g. in the telecommunication area, known fluoropolymers which hardly absorb the wavelengths to be transmitted can be used. An example of such a fluorinated polymer made from fluorohydrocarbon monomers, oligomers or polymer components end-capped with radiation curable ethylenically unsaturated groups such as acrylate or methacrylate is disclosed in US 6,306,563.

Luminescent nanoparticles, such as REM doped compositions can also be preferably used in non-IR absorbing fluoropolymers, such as poly(vinylfluoride), poly (vinylidenfluoride), Teflon AF (an amorphous poly(vinylfluoride)) and Teflon PFA (a perfluoroalkoxy copolymer).

Other fluorinated polymers which can be used involve fluorinated polyester-, polyether-, polyacrylate-, polyvinyl-, polyamide- and polyurethane- based polymers and copolymers.

The present invention thus enables the construction of luminescent devices containing a fluorinated medium, in particular a fluorinated polymer, and the previously described surface-modified (luminescent) nanoparticles.

The luminescent device may for instance be an optical amplifier, zero-loss link, upconversion light source, standard light source, a volumetric display, flat panel display or a source operating in a wavelength-division-multiplexing scheme.

### Examples:

### 1. Synthesis of surface-modified NdPO4

### 1.1. Synthesis of NdPO₄ -nanoparticles:

a) A 1000 ml round-bottom flask with reflux condenser, temperature sensor and heating mantle attached is charged with 450 ml of tris(ethylhexyl)phosphate and evacuated at approx. 323 K for 1 h with stirring.
b) In a second flask 10 ml of tris(ethylhexyl) phosphate and 133 ml of trioctylamine are mixed and 100 mmol of H₃PO₄ is added.
c) In a third flask NdCl₃·6H₂0 (100 mmol), is dissolved in 40 ml of methanol and subsequently poured into the round-bottom flask.
d) As soon as the metal salt is completely dissolved in methanol, the mixture is poured into the round-bottom flask and the methanol is removed by distillation at 323 K.
e) The phosphoric acid-containing solution is then added and the reaction mixture is stirred overnight at a temperature of 473 K. As soon as the internal temperature is decreased to 448 K,
f) the reaction is stopped, and
g) the resulting nanoparticles can be precipitated from the solution by adding a 4-fold excess amount of methanol (2400 ml).

### 1.2. Surface-modification of NdPO₄ -nanoparticles

A 25 ml round bottomed flask with reflux condenser, temperature sensor and heating mantle attached is charged with 0.209 g NdPO₄ nanoparticles. 1.5 ml 1H, 1H, 2H, 2H-perfluorodecan-1-ol (commercially available from ABCR GmbH & Co. KG, Germany) is added thereto. The resulting mixture is heated slowly to 210°C under reflux cooling and with constant stirring. At this temperature a clear, boiling solution is obtained. This solution is maintained at 210°C over a period of time of 10 minutes and then left to cool down to room temperature again. During cooling the solution again becomes cloudy, however, to a much lesser degree than before heating.

If perfluorohexane (10.ml) is added thereto as perfluorinated medium, a clear dispersion is obtained.

The optical data (absorption spectrum and fluorescence spectrum) of the NdPO₄ nanoparticles homogeneously dispersed in the per-fluorinated medium correspond to those of dispersions in conventional, non-fluorinated solvents. This indicates that nanoparticles still exist as solid, dispersed phase.

From the above solution behaviour it can further be concluded that the nanoparticles were successfully surface-modified leading to an increased dispersibility both in 1H, 1H, 2H, 2H perfluorodecan-1-ol and other perfluorinated solvents.

### 2. Synthesis of surface-modified YbPO₄:Er-nanoparticles

### 2.1.Synthesis of surface-modified YbPO₄:Er-nanoparticles

a) A 250 ml round-bottom flask with reflux condenser, temperature sensor and heating mantle attached is charged with 8,25 ml of tributylphosphate and evacuated at approx. 323 K for 1 h with stirring.
b) In a second flask 45 ml of diphenyl ether is evacuated at 353K for 5h, then mixed with 20ml trioctylamine. Finally, 4,5 ml of phosphoric acid is added to this solution.
c) In a third flask YbCl₃ · 6H₂0 (5,7107g) and ErCl₃ · 6H₂0 (0,115g) are dissolved in 10 ml of methanol and subsequently poured into the flask containing solution (a).
d) As soon as the metal salt is completely dissolved, the methanol is removed by distillation under reduced pressure at 323 K.
e) The phosphoric acid-containing solution is then added and the reaction mixture is stirred overnight at a temperature of 473 K.
f) The reaction is stopped after 16h by decreasing the temperature to ambient temperature, and
g) the nanoparticles are precipitated from the solution by adding 400ml methanol to the reaction mixture.

### 2.2. Surface modification of YbPO₄:Er-nanoparticles

A 25 ml round bottomed flask with reflux condenser, temperature sensor and heating mantle attached is charged with 0.5 g YbPO4:Er nanoparticles. 3 ml 1H,1H,2H,2H-perfluorooctan-1-ol (commercially available from ABCR GmbH & Co. KG, Germany) is added to the solid material. The mixture is heated to 200°C under reflux and the stirred mixture is maintained at this temperature for 20 min. After 15 minutes the mixture becomes clear, which indicates, that a reaction on the particle surface has taken place. The heating is stopped and the warm solution is added to a fluorinated solvent.
The product yielded by this treatment is soluble in a wide range of fluorinated solvents such as perfluorohexane, perfluorobutyltetrahydrofurane or perfluoroethyleneglycols.

### 3. Synthesis of surface-modified LaF₃:Nd-nanoparticles

### 3.1. Synthesis of LaF₃:Nd-nanoparticles

LaF₃:Nd-nanoparticles were synthesized from LaCl₃.7H₂0, NdCl₃.6H₂O and Triethylamin-trishydrofluroid (CH₃CH₂)₃N·3HF is a similar manner as described for example 36 (LaF₃:Ce, Nd) in PCT/DE 01/03433.

### 3.2 Surface modification of LaF₃:Nd-nanoparticles

A 10 ml round-bottomed flask with reflux condenser, temperature sensor and heating mantle attached is charged with 50 mg LaF₃:Nd-nanoparticles. 1 ml Zonyl-BA L (mixture of 1H,1H,2H,2H-perfluoro alcohols with different chain lengths, commercially available from Du Pont) is added to the solid material. The mixture is heated to 200°C under reflux and the stirred mixture is maintained at this temperature for one minute. The dispersion is cooled to room temperature and remains clear at 20°C.
The product yielded by this treatment is soluble in a wide range of fluorinated solvents such as: perfluoro hexane, perfluorobutyltetrahydrofurane or perfluoroethyleneglycol.

## Claims

1. Nanoparticle being dispersible in a fluorine-containing medium, comprising:
An inorganic nanoparticle core selected from semiconductors of III-V or II-VI type, non-doped metal oxides, fluorescent, doped metal oxides, non-doped metals salts or doped metal salts,
An outer layer comprising an organic compound modifying the surface of the nanoparticle core and having a first portion comprising at least one linking group for the nanoparticle and a second portion comprising at least one fluorinated group,
provided that
said nanoparticles are not nanoparticles having
a crystal lattice, or in the case of doping, a host lattice essentially consisting of Z sulphate (Z=magnesium (Mg), calcium (Ca), strontium (Sr) or barium (Ba)), which can be synthesized by crystal growth from a Z ion source and a sulphate ion source in a liquid phase synthesis mixture, containing a non-aqueous solvent such as glycerin, ethylene glycol, polyethylene glycols, polyalcohols or dimethyl sulfoxide (DMSO) with coordinating properties, which acts as a control component for particle growth, followed by
the following after-treatment step: Heating the synthezied nanoparticles in the presence of a modification molecule for the surface of the nanoparticles, wherein the modification molecule is selected
from a perfluorinated phosphate, a perfluorinated amine, a perfluorinated phosphonate, a perfluorinated phosphine, a perfluorinated phosphine oxide, a perfluorinated carboxylic acid, perfluorinated alcohols, perfluorinated organic esters, perfluorinated silanes, perfluorinated siloxanes, perfluorinated organic sulfones, perfluorinated organic ketones, perfluorinated organic nitriles, perfluorinated organic sulfoxides, perfluorinated organic amides.

2. Nanoparticle according to claim 1, wherein the linking group comprises a polar group.

3. Nanoparticle according to claims 1 or 2, wherein the linking group is selected from hydroxy, carboxylic acid, carboxylic ester, ether oxygen, amine or amino, amide, nitril or cyano, phosphoric acid or phosphoric acid ester, phosphonic acid or phosphonic acid ester, phosphinic acid or phosphinic acid ester, phosphane, phospane oxide, sulfuric acid or sulfate, sulfonic acid or sulfonic acid ester, thiol or di-substituted sulfide.

4. Nanoparticle according to claim 1, wherein the fluorinated group is located at the opposite end(s) of the organic molecule with respect to the linking group.

5. Nanoparticle according to any of claims 1 to 4, wherein the overall fluorine content of the organic surface modifier is at least 50 mol% based on the total number of hydrogen and fluorine atoms.

6. Nanoparticle according to claim 5, wherein the overall fluorine content of the organic surface modifier is at least 80 mol%.

7. Nanoparticle according to any of claims 1 to 6, wherein the total carbon number of the surface modifying organic molecule is from 6 to 20.

8. Nanoparticle according to claims 1, 2 or 3 wherein a non-fluorinated spacer having at least 2 atoms is located between the linking group and the fluorinated group.

9. Nanoparticle according to claim 8, wherein this spacer has at least 2 carbon atoms.

10. Nanoparticle according to claim 1, wherein the organic surface modifier has the formula
-HO-(CH₂)ₓ(CF2)_{y}(CF₃)
wherein x and y are integers, x is at least 2, x+y+1 is from 6 to 20, and y/x is at least one.

11. Nanoparticle according to claim 10, wherein y/x is at least three.

12. Nanoparticle according to any of claims 1 to 11 wherein the metal salt is selected from phosphates, halophosphates, arsenates, sulphates, borates, aluminates, gallates, silicates, germanates, vanadates, niobates, tantalates, tungstates, molybdates, alkalihalogenates, other halides (in particular fluorides), nitrides, sulphides, selenides, sulphoselenides, as well as oxysulphides.

13. Nanoparticle according claims 12 wherein the salt is doped and luminescent.

14. Process for the preparation of nanoparticles according to claim 1 being dispersible in a fluorine-containing medium, comprising the steps of:
Providing inorganic nanoparticles of claim 1, and adding thereto an organic compound of claim 1, modifying the surface of the nanoparticle cores.

15. Process according to claim 14, wherein the mixture of said nanoparticles and said organic compound is heated to a temperature from 100 to 300 °C.

16. Process according to claim 14 or 15, wherein the nanopartycles provided are obtainable by synthesis in a reaction medium comprising water, glycol or an organic solvent controlling the growth.

17. Process according to claim 16, wherein the nanoparticles are metal salts being producible according to a process comprising the step of:
reacting, in an organic reaction medium comprising a solvent mixture comprising at least one crystal growth-controlling organic solvent containing at least one phosporous or nitrogen atom, and optionally at least one further solvent, a reaction medium-soluble or dispersible metal source and a reaction medium-soluble or dispersible anion source.

18. Fluorinated medium containing the surface-modified nanoparticles defined in any of claims 1 to 13.

19. Fluorinated medium according to claim 18 which is selected from partially or completely fluorinated solvents and polymers.

20. Luminescent device comprising a fluorinated medium and surface-modified nanoparticles as defined in any of claims 1 to 13 having luminescent properties.

## Patentansprüche

1. Nanopartikel, das in einem fluorhaltigen Medium dispergierbar ist und folgendes umfaßt:
einen anorganischen Nanopartikelkern, welcher aus Halbleitern des III-V oder II-VI Typs, undotierten Metalloxiden, Fluoreszenzstoffen, dotierten Metalloxiden, undotierten Metallsalze oder dotierten Metallsalzen ausgewählt ist,
eine äußere Schicht, die eine organische Verbindung umfaßt, welche die Oberfläche des Nanopartikelkerns modifiziert, und die einen ersten Bereich, der mindestens eine Verbindungsgruppe zu dem Nanopartikel umfaßt, und einen zweiten Bereich, der mindestens eine fluorierte Gruppe umfaßt, aufweist,
mit der Maßgabe, daß diese Nanopartikel keine Nanopartikel sind, welche ein Kristallgitter oder im Falle der Dotierung ein Gastgitter, das im wesentlichen aus Z-Sulfat (Z=Magnesium (Mg), Calcium (Ca), Strontium (Sr) oder Barium (Ba)) besteht, aufweisen, welches synthetisiert ist durch Kristallwachstum aus einer Z-Ionenquelle und einer Sulfationenquelle in einer Flüssigphasensynthesemischung, die ein nicht-wäßriges Lösungsmittel wie z.B. Glycerin, Ethylenglycol, Polyethylenglycole, Polyalkohole oder Dimethylsulfoxid (DMSO) mit koordinierenden Eigenschaften enthält, das als Kontrollkomponente für das Partikelwachstum fungiert, gefolgt von dem Nachbehandlungsschritt des Erwärmens der synthetisierten Nanopartikel in Gegenwart eines Modifikationsmoleküls für die Oberfläche des Nanopartikels, wobei das Modifikationsmolekül aus einem perfluorierten Phosphat, perfluorierten Amin, perfluorierten Phosphonat, perfluorierten Phosphin, perfluorierten Phosphinoxid, einer perfluorierten Carboxylsäure, perfluorierten Alkoholen, perfluorierten organischen Estern, perfluorierten Silanen, perfluorierten Siloxanen, perfluorierten organischen Sulfonen, perfluorierten organischen Ketonen, perfluorierten organischen Nitrilen, perfluorierten organischen Sulfoxiden, perfluorierten organischen Amiden ausgewählt ist.

2. Nanopartikel gemäß Anspruch 1, worin die Verbindungsgruppe eine polare Gruppe umfaßt.

3. Nanopartikel gemäß Anspruch 1 oder 2, worin die Verbindungsgruppe aus Hydroxyl, Carbonsäure, Carbonsäureester, Ethersauerstoff, Amin oder Amino, Amid, Nitril oder Cyano, Phosphorsäure oder Phosphorsäureester, Phosphonsäure oder Phosphonsäureester, Phosphinsäure oder Phosphinsäureester, Phosphan, Phosphanoxid, Schwefelsäure oder Sulfat, Sulfonsäure oder Sulfonsäureester, Thiol oder disubstituiertem Sulfid ausgewählt ist.

4. Nanopartikel gemäß Anspruch 1, worin die fluorierte Gruppe in Bezug auf die Verbindungsgruppe an dem/den entgegengesetzten Ende(n) des organischen Moleküls angeordnet ist.

5. Nanopartikel gemäß mindestens einem der Ansprüche 1 bis 4, worin der Gesamtfluorgehalt des organischen Oberflächenmodifizierers mindestens 50 mol% ist, bezogen auf die Gesamtzahl der Wasserstoff- und Fluoratome.

6. Nanopartikel gemäß Anspruch 5, worin der Gesamtfluorgehalt des organischen Oberflächenmodifizierers mindestens 80 mol% ist.

7. Nanopartikel gemäß mindestens einem der Ansprüche 1 bis 6, worin die Gesamtkohlenstoffzahl des organischen Moleküls, welches die Oberfläche modifiziert, zwischen 6 und 20 ist.

8. Nanopartikel gemäß Anspruch 1, 2 oder 3, worin ein nicht-fluorierter Platzhalter mit mindestens 2 Atomen zwischen der Verbindungsgruppe und der fluorierten Gruppe angeordnet ist.

9. Nanopartikel gemäß Anspruch 8, worin dieser Platzhalter mindestens 2 Kohlenstoffatome aufweist.

10. Nanopartikel gemäß Anspruch 1, worin der organische Oberflächenmodifizierer die Formel
-HO-(CH₂)ₓ(CF₂)_{y}(CF₃)
aufweist, wobei x und y ganze Zahlen sind und x mindestens 2, x+y+1 zwischen 6 und 20 und y/x mindestens 1 ist.

11. Nanopartikel gemäß Anspruch 10, worin y/x mindestens 3 ist.

12. Nanopartikel gemäß mindestens einem der Ansprüche 1 bis 11, worin das Metallsalz aus Phosphaten, Halogenphosphaten, Arsenaten, Sulphaten, Boraten, Aluminaten, Gallaten, Silicaten, Germanaten, Vanadaten, Niobaten, Tantalaten, Wolframaten, Molybdaten, Alkalihalogenaten oder anderen Halogenen (insbesondere Fluoriden), Nitriden, Sulphiden, Seleniden, Sulphoseleniden sowie Oxysulphiden ausgewählt ist.

13. Nanopartikel gemäß Anspruch 12, worin das Salz dotiert und lumineszierend ist.

14. Verfahren zur Herstellung von Nanopartikeln gemäß Anspruch 1, welche in einem fluorhaltigen Medium dispergierbar sind, und das das Bereitstellen anorganischer Nanopartikel gemäß Anspruch 1 und das Hinzufügen einer organischen Verbindung gemäß Anspruch 1, die die Oberfläche der Nanopartikelkerne modifiziert, umfaßt.

15. Verfahren gemäß Anspruch 14, worin die Mischung aus den Nanopartikeln und der organischen Verbindung auf eine Temperatur zwischen 100 und 300°C erwärmt wird.

16. Verfahren gemäß Anspruch 14 oder 15, worin die bereitgestellten Nanopartikel erhältlich sind durch eine Synthese in einem Reaktionsmedium, das Wasser, Glycol oder ein das Wachstum kontrollierendes organisches Lösungsmittel umfaßt.

17. Verfahren gemäß Anspruch 16, worin die Nanopartikel Metallsalze sind, die nach einem Verfahren herstellbar sind, das den Schritt der Reaktion einer im Reaktionsmedium löslichen oder dispergierbaren Metallquelle und einer im Reaktionsmedium löslichen oder dispergierbaren Anionenquelle in einem organischen Reaktionsmedium, das eine Lösungsmittelmischung, die mindestens ein das Kristallwachstum kontrollierendes organisches Lösungsmittel, das mindestens ein Phosphor- oder Stickstoffatom enthält, und wahlweise mindestens ein weiteres Lösungsmittel umfaßt.

18. Fluoriertes Medium, das die oberflächenmodifizierten Nanopartikel gemäß mindestens einem der Ansprüche 1 bis 13 enthält.

19. Fluoriertes Medium gemäß Anspruch 18, das aus teilweise oder vollständig fluorierten Lösungsmitteln und Polymeren ausgewählt ist.

20. Luminenszenzgerät, das ein fluoriertes Medium und oberflächenmodifizierte Nanopartikel gemäß mindestens einem der Ansprüche 1 bis 13 umfaßt, und lumineszierende Eigenschaften aufweist.

## Revendications

1. Nanoparticule dispersible dans un milieu contenant du fluor, comprenant :
un noyau de nanoparticule inorganique choisi parmi les semi-conducteurs de type III à V ou II à VI, des oxydes de métaux non dopé, des oxydes de métaux dopés, fluorescentes des sels de métaux non dopés ou des sels de métaux dopés,
une couche externe comprenant un composé organique modifiant la surface du noyau de la nanoparticule et ayant une première partie comprenant au moins un groupement de liaison pour la nanoparticule et une seconde partie comprenant au moins un groupement fluoré,
pourvu que
lesdites nanoparticules ne soient pas des nanoparticules ayant
un réseau cristallin, ou dans le cas du dopage, un réseau hôte essentiellement constitué de sulfate de Z (Z = magnésium (Mg), calcium (Ca), strontium (Sr) ou baryum (Ba)), qui peut être synthétisé par une croissance de cristal à partir d'une source d'ion Z et une source d'ion sulfate dans un milieu de synthèse en phase liquide, contenant un solvant non aqueux tel que la glycérine, l'éthylène glycol, des polyéthylènes glycols, des polyalcools ou du diméthylsulfoxyde (DMSO) avec des propriétés de coordination, qui agit comme un composé de contrôle pour la croissance de particules, suivie par
l'étape post-traitement suivante : le chauffage des nanoparticules synthétisées en présence d'une molécule de modification pour la surface des nanoparticules, dans lequel la molécule de modification est choisie
parmi un phosphate perfluoré, une amine perfluorée, un phosphonate perfluoré, un phosphine perfluoré, un oxyde de phosphine perfluoré, un acide carboxylique perfluoré, des alcools perfluorés, des esters organiques perfluorés, des silanes perfluorés, des siloxanes perfluorés, des sulfones organiques perfluorés, des cétones organiques perfluorées, des nitriles organiques perfluorés, des sulfoxydes organiques perfluorés, des amides organiques perfluorés.

2. Nanoparticule selon la revendication 1, dans laquelle le groupement de liaison comprend un groupement polaire.

3. Nanoparticule selon la revendication 1 ou 2, dans laquelle le groupement de liaison est choisi parmi un hydroxy, un acide carboxylique, un ester carboxylique, un éther oxygène, une amine ou un amino, un amide, un nitrile ou un cyano, un acide phosphorique ou un ester d'acide phosphorique, un acide phosphonique ou un ester d'acide phosphonique, un acide phosphinique ou un ester d'acide phosphinique, un phosphane, un oxyde de phosphane, un acide sulfurique ou un sulfate, un acide sulfonique ou un ester d'acide sulfonique, un thiol ou un sulfure di-substitué.

4. Nanoparticule selon la revendication 1, dans lequel le groupement fluoré est situé à l'extrémité (aux extrémités) opposée(s) de la molécule organique par rapport au groupement de liaison.

5. Nanoparticule selon l'une quelconque des revendications 1 à 4, dans lequel la teneur totale en fluor du modificateur de surface organique est d'au moins 50 moles % sur la base du nombre total d'atomes d'hydrogène et de fluor.

6. Nanoparticule selon la revendication 5, dans laquelle la teneur totale en fluor du modificateur de surface organique est d'au moins 80 moles %.

7. Nanoparticule selon l'une quelconque des revendications 1 à 6, dans laquelle le nombre total de carbone de la molécule organique modifiant la surface se situe entre 6 et 20.

8. Nanoparticule selon les revendications 1, 2 ou 3, dans laquelle un espaceur non fluoré ayant au moins 2 atomes est situé entre le groupement de liaison et le groupement fluoré.

9. Nanoparticule selon la revendication 8, dans laquelle cet espaceur a au moins 2 atomes de carbone.

10. Nanoparticule selon la revendication 1, dans laquelle le modificateur de surface organique a la formule
-HO-(CH₂)ₓ(CF₂)_{y}(CF₃)
dans laquelle x et y sont des nombres entiers, x vaut au moins 2, x + y + 1 vaut de 6 à 20, et y / x vaut au moins un.

11. Nanoparticule selon la revendication 10, dans laquelle y / x vaut au moins trois.

12. Nanoparticule selon l'une quelconque des revendications 1 à 11, dans laquelle le sel métallique est choisi parmi les phosphates, les halophosphates, les arsénates, les sulfates, les borates, les aluminates, les gallates, les silicates, les germanates, les vanadates, les niobates, les tantalates, les tungstates, les molybdates, les alcalihalogénates, d'autres halogénures (en particulier les fluorures), les nitrures, les sulfures, les séléniures, les sulfoséléniures de même que les oxysulfures.

13. Nanoparticule selon la revendication 12, dans laquelle le sel est dopé et luminescent.

14. Procédé pour la préparation de nanoparticules selon la revendication 1 dispersibles dans un milieu contenant du fluor, comprenant les étapes de :
la fourniture de nanoparticules inorganiques selon la revendication 1, et l'ajout à celles-ci d'un composé organique selon la revendication 1, modifiant la surface des noyaux de nanoparticules.

15. Procédé selon la revendication 14, dans lequel le mélange desdites nanoparticules et dudit composé organique est chauffé jusqu'à une température allant de 100 à 300 °C.

16. Procédé selon la revendication 14 ou 15, dans lequel les nanoparticules fournies peuvent être obtenues par synthèse dans un milieu réactionnel comprenant de l'eau, du glycol ou un solvant organique contrôlant la croissance.

17. Procédé selon la revendication 16, dans lequel les nanoparticules sont des sels de métaux productibles selon un procédé comprenant l'étape de :
la réaction, dans un milieu réactionnel organique comprenant un mélange de solvant comprenant au moins un solvant organique contrôlant la croissance de cristaux contenant au moins un atome de phosphore ou d'azote, et facultativement au moins un autre solvant, une source de métal soluble ou dispersible dans le milieu réactionnel et une source d'anion soluble ou dispersible dans le milieu réactionnel.

18. Milieu fluoré contenant les nanoparticules à surface modifiée définies selon l'une quelconque des revendications 1 à 13.

19. Milieu fluoré selon la revendication 18, qui est choisi parmi des solvants et des polymères partiellement ou complètement fluorés.

20. Dispositif luminescent comprenant un milieu fluoré et des nanoparticules à surface modifiée telles que définies selon l'une quelconque des revendications 1 à 13 ayant des propriétés luminescentes.
